Europäisches Patentamt

European Patent Office

Office européen des brevets

(11) Veröffentlichungsnummer: **0 193 206**
**B1**

(19)

(12) # EUROPÄISCHE PATENTSCHRIFT

(45) Veröffentlichungstag der Patentschrift:
19.04.89

(51) Int. Cl.⁴: **C12G 3/08, B01D 1/26**

(21) Anmeldenummer: 86102667.2

(22) Anmeldetag: 28.02.86

(54) Verfahren und Vorrichtung zur Entalkoholisierung von Bier, Bierhefe, Wein, Sekt, Schaumwein oder dergleichen.

(30) Priorität: 28.02.85 DE 3507150

(43) Veröffentlichungstag der Anmeldung:
03.09.86 Patentblatt 86/36

(45) Bekanntmachung des Hinweises auf die Patenterteilung:
19.04.89 Patentblatt 89/16

(84) Benannte Vertragsstaaten:
AT BE CH DE FR GB LI

(56) Entgegenhaltungen:
DE-B- 1 089 727
DE-C- 967 853
FR-A- 2 505 667
GB-A- 1 300 472
US-A- 2 053 111
US-A- 3 093 553

Verdampfertechnik, Reinhard Billet, Bibliographis ches
Institut, Mannheim, 1965, Titelseite, Vorspann,
Seiten 30-31

(73) Patentinhaber: GEA Wiegand GmbH,
Einsteinstrasse 9 - 15, D-7505 Ettlingen(DE)

(72) Erfinder: Mehl, Günter, An Deroy 34,
D-6728 Germersheim(DE)

(74) Vertreter: Weickmann, Heinrich, Dipl.-Ing. et al,
Patentanwälte Dipl.-Ing. H.Weickmann Dipl.-Phys.Dr.
K.Fincke Dipl.-Ing. F.A.Weickmann Dipl.-Chem. B. Huber
Dr.-Ing. H. Liska Dipl.-Phys.Dr. J. Prechtel
Postfach 860820, D-8000 München 86(DE)

## Beschreibung

Zur Entfernung von Alkohol, insbesondere Gärungsalkohol aus Bier, Bierhefe, Wein, Fruchtweinen oder dergl., sind eine Reihe von Verfahren bekannt, darunter auch das Abdampfen im Vakuum mit dem Vorteil niedriger Prozeß-Temperaturen und damit schonender Behandlung des Produkts (Zeitschrift "Flüssiges Obst", 1983, Seite 666). Um den Dampfverbrauch auch bei der Entalkoholisierung durch Verdampfen zu reduzieren, ist es bekannt (FR-OS 2 496 484), bei einer aus zwei Verdampfern, 3, 4 bestehenden Verdampferreihe, welcher eine Destillationskolonne 1 im Produktflüssigkeitsstrom vorangeht, die in den Verdampfern der Destillationskolonne gebildeten Produktbrüden in zwei geschlossenen Kreisläufen durch die Anlage zu führen. In einem ersten Kreislauf wird ein Teil der im Verdampfer 3 gebildeten Produktbrüden nach Verdichtung der Destillationskolonne 1 rückgeführt; die am Kolonnenkopf gebildeten Brüden werden dem Verdampfer 3 zur Heizung zugeführt. Der übrige Teil der verdichteten Produktbrüden des Verdampfers 3 wird im zweiten Kreislauf der Heizseite des Verdampfers 4 zugeführt; die im Verdampfer 4 gebildeten Produktbrüden des Verdampfers 3 zugemischt. Man sollte annehmen, daß diese Art der Verdampferbeheizung in geschlossenen Kreisläufen zu optimalen Heizbedingungen führt. Es hat sich jedoch herausgestellt, daß der Wärmeübertrag teilweise nicht befriedigt. Auch bedingt die Führung der Produktflüssigkeit durch die vorgeschaltete Destillationskolonne eine große und damit in Anschaffung und Unterhaltung teure Destillationskolonne, die die hygienischen Ansprüchen genügen muß und somit lange und aufwendige Reinigungen erfordert; bei schäumenden Produktflüssigkeiten kann eine Destillationskolonne nicht eingesetzt werden.

Aus der DE-PS 967 853 ist ein Verfahren mit den Merkmalen des Oberbegriffs des Anspruchs 1 bekannt, welches dem Eindampfen von gegorener Sulfitablauge und zur Alkoholgewinnung daraus dient. Die Verdampferreihe besteht aus vier Verdampfern; die Beheizung der Verdampfer erfolgt im Gegenstrom ohne Verdichtung der Produktbrüden. Dieses bekannte Verfahren hat sich als wenig geeignet für die Entalkoholisierung empfindlicher Flüssigkeiten im Lebensmittelbereich, wie Bier, Wein, Sekt und Schaumwein, herausgestellt, bei welchen es, insbesondere zur Aromaerhaltung, auf die möglichst exakte Temperatureinhaltung in den verschiedenen Verdampferstufen ankommt.

Die Aufgabe der Erfindung liegt demgegenüber darin, ein Verfahren der eingangs genannten Art zur Entalkoholisierung von Bier, Bierhefe, Wein, Sekt, Schaumwein oder dergl. anzugeben mit verringertem Dampfverbrauch und möglichst gleichmäßiger Beheizung der Verdampfer.

Diese Aufgabe wird durch die Merkmale des Kennzeichens des Anspruchs 1 in Verbindung mit den Merkmalen des Oberbegriffs gelöst.

Die Erfindung macht sich die Erkenntnis zunutze, daß der Alkoholgehalt der Produktflüssigkeit abnimmt, je mehr Verdampfer von der Produktflüssigkeit durchströmt worden sind. Dementsprechend nimmt auch der Alkoholgehalt der im jeweiligen Verdampfer gebildeten Produktbrüden ab. Je niedriger der Alkoholgehalt der Produktbrüden ist, um so günstiger sind dessen Heizeigenschaften. Würde man dagegen beispielsweise mit den sehr alkoholreichen Produktbrüden des ersten Verdampfers der Verdampferreihe einen auf diesen folgenden Verdampfer heizen, so ergäbe sich mit fortschreitender Kondensation dieses Produktbrüden im Heizteil des nachfolgenden Verdampfers eine Anreicherung der Restbrüden mit Alkohol, mit der Folge, daß die Kondensationstemperatur der Restbrüden sinkt. Es ergäbe sich eine im Bereich von mehreren Grad Celsius liegende, vom Alkoholanteil abhängige, Absenkung der Kondensationstemperatur bei Kondensator-Flächenbereichen des Heizteils, die vom Einlaßende der Produktbrüden weiter entfernt sind. Der Wärmeübertrag wäre dementsprechend schlecht; die räumliche Temperaturinhomogenität würde zu großen Problemen bei der Verfahrensdurchführung führen. Erfindungsgemäß werden die praktisch alkoholfreien Brüden des vom Produktflüssigkeitsstrom zuletzt durchströmten Verdampfers sowohl (unverdichtet) zum Heizen des für die Qualität des Verfahrensprodukts besonders wichtigen ersten Verdampfers eingesetzt als auch (verdichtet) zum Heizen des bei vergleichsweise höherer Temperatur zu betreibenden mittleren Verdampfers. Bei weitgehender Nutzung der Brüdenwärme erhält man so eine äußerst gleichmäßige Beheizung des ersten und des mittleren Verdampfers.

Ist in dem alkoholhaltigen Produkt Inertgas (z.B. $CO_2$) gelöst (z.B. bei Bier); so wird vorgeschlagen, daß man die Produktflüssigkeit vor dem Einleiten in die Verdampferreihe durch eine Entgasungsstufe führt. Diese Entgasungsstufe wird vorzugsweise von einem Verdampfer gebildet, so daß der zusätzliche apparative Aufwand und Energieverbrauch relativ gering ist. Zur weiteren Verringerung des Dampfverbrauchs wird vorgeschlagen, daß man vorzugsweise verdichtete Produktbrüden dem Heizteil der Entgasungsstufe zuführt.

Die in der Entgasungsstufe gebildeten, Wasserdampf, Alkohol, Inertgas enthaltenden Brüden können einem Kondensator zur Rückgewinnung zugeführt werden. Ebenso können die im Verdampferteil des von der Produktflüssigkeit zuerst durchströmten Verdampfers der Verdampferreihe gebildeten Produktbrüden einem Kondensator zugeführt werden, da diese aufgrund ihres hohen Alkoholgehalts zur Wärmerückgewinnung nur schlecht geeignet sind, wie vorstehend erläutert. Dagegen ist der Alkoholgehalt der Produktbrüden des vorletzten Verdampfers bereits so gering, daß diese zur Heizung des zuletzt von der Produktflüssigkeit durchströmten Verdampfers Verwendung finden können.

Um Brüdenkondensat zur weiteren Verwertung in ein alkoholreiches und ein alkoholarmes Gemisch trennen zu können, wird vorgeschlagen, daß man das im Heizteil wenigstens eines der Verdampfer und/oder in wenigstens einem der Kondensatoren gewonnene Kondensat einer Destillationskolonne zuführt. Hierbei wird zur Verringerung des Energieeinsatzes vorgeschlagen, daß man das Kopfprodukt der Destillationskolonne dem Heizteil eines der Verdampfer, vorzugsweise dem die Entgasungsstufe bildenden Verdampfer zuführt. Dieser Verdampfer wird dann nach Art eines Kolonnenkopf-Kondensators betrieben.

Die Destillationskolonne gibt Lutterwasser ab mit einem Alkoholgehalt von beispielsweise ≦0,05 Gew.-% sowie Kondensat mit einem Alkoholgehalt von beispielsweise 90 Gew.-%, wenn man Bier mit einem Alkoholgehalt zwischen 1 und 7 Gew.-% dem erfindungsgemäßen Verfahren unterzieht. Das vom letzten Kondensator abgegebene Bierkondensat hat dann einen Alkoholgehalt von beispielsweise 0,04 Gew.-%. Angemerkt sei, daß die Destillationskolonne gemäß der Erfindung lediglich zur Destillation der gewonnenen Brüdenkondensate eingesetzt wird und somit relativ geringen Bau- und Unterhaltungs-Aufwand erfordert.

Da in dem der Destillationskolonne zuzuführenden Kondensat zumeist Aromastoffe enthalten sind, wird vorgeschlagen, daß man der Destillationskolonne im Bereich des bzw. der entsprechenden Kolonnenböden aromahaltige Flüssigkeit entnimmt.

Die Erfindung betrifft auch eine Vorrichtung zur Durchführung des vorstehend beschriebenen Verfahrens.

Die Erfindung wird im folgenden an mehreren bevorzugten Ausführungsbeispielen anhand der Zeichnung erläutert.

Es zeigt:

Fig. 1 eine stark vereinfachte Schemaansicht einer nach dem erfindungsgemäßen Verfahren arbeitenden Entalkoholisierungs-Anlage;

Fig. 2 eine Schemaansicht einer zweiten Ausführungsform der Anlage und

Fig. 3 eine Schemaansicht einer dritten Ausführungsform.

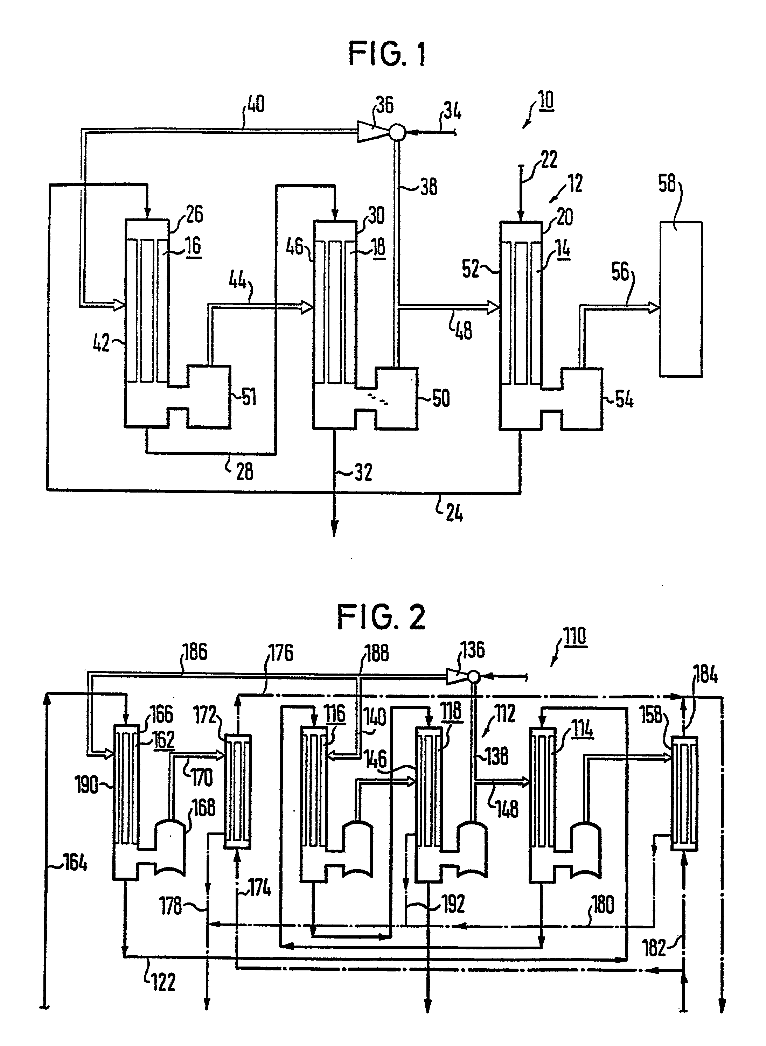

In den Fig. 1–3 sind Produktbrüden-Leitungen mit Doppel-Linie dargestellt, Produktflüssigkeits-Leitungen mit durchgezogener Linie, Kondensat-Leitungen mit dünner Strick-Punkt-Linie und Kühlwasser-Leitungen mit dicker Strich-Punkt-Linie.

Die Entalkoholisierungsanlage 10 gemäß Fig. 1 besteht aus einer Reihe 12 von im Produktflüssigkeitsstrom hintereinander geschalteten Verdampfern, welche der Reihe nach mit 14, 16 und 18 bezeichnet sind. Dem Verdampferteil 20 des ersten Verdampfers 14 wird über eine Leitung 22 Produktflüssigkeit (im folgenden beschriebener Anwendungsfall: Bier) zugeführt. Eine Leitung 24 verbindet den Verdampferteil 20 ausgangsseitig mit dem Eingang eines Verdampferteils 26 des Verdampfers 16. Eine Leitung 28 verbindet den Verdampferteil 26 ausgangsseitig mit dem Eingang eines Verdampferteils 30 des dritten und letzten Verdampfers 18. Vom Ausgang des Verdampferteils 30 führt eine Leitung 32 weg, die die in der gewünschten Weise entalkoholisierte Produktflüssigkeit mit sich führt.

Die Beheizung der Verdampferreihe 12 wird in der folgenden Weise vorgenommen:
eine Frischdampf-Leitung 34 betreibt eine Dampfstrahl-Pumpe 36, welche über eine Leitung 38 mit dem Brüdenausgang 50 des Verdampferteils 30 des letzten Verdampfers 18 verbunden ist. Die Dampfstrahl-Pumpe 36 verdichtet also die im Verdampferteil 30 gebildeten Brüden von beispielsweise 125 mbar, entsprechend einer Kondensationstemperatur von 50°C, auf einen Druck von 250 mbar (absolut), entsprechend einer Kondensationstemperatur von 65°C. Die Produktflüssigkeit wird dadurch auf ca. 56°C erwärmt und somit geschont. Die verdichteten Brüden werden zusammen mit dem die Brüden mitreißenden Dampf über eine Leitung 40 dem Eingang eines Heizteils 42 des zweiten Verdampfers 16 zugeführt. Eine Leitung 44 verbindet den Brüdenausgang 51 des Verdampferteils 26 des zweiten Verdampfers 16 mit dem Eingang eines Heizteils 46 des dritten Verdampfers 18. Durch die Leitung 44 werden also die im Verdampferteil 26 entstehenden Produktbrüden bei einem Druck von beispielsweise 160 mbar, entsprechend einer Kondensationstemperatur von 55°C, dem Heizteil des dritten Verdampfers 18 zugeführt. Eine von der Leitung 38 abzweigende Leitung 48 führt unverdichtete Produktbrüden vom Brüdenausgang 50 des Verdampferteils 13 des dritten Verdampfers 18 dem Eingang eines Heizteils 52 des ersten Verdampfers 14 zu, also bei einem Druck von ca. 125 mbar, entsprechend einer Kondensationstemperatur von 50°C. Die im ersten Verdampfer 14 gebildeten Produktbrüden werden vom Brüdenausgang 54 des Verdampferteils 20 des Verdampfers 14 über eine Leitung 56 einem Kondensator 58 zugeführt, bei einem Druck von etwa 95 mbar. Diese Produktbrüden sind alkoholreich, so daß sich im Kondensator 58 mit fortschreitender Kondensation eine deutlich absinkende Kondensationstemperatur ergibt. Dies ist jedoch im Kondensator 58 nicht weiter störend.

Die Produktbrüden des vom Produkt zuletzt durchströmten Verdampfers 18 heizen also sowohl den vom Produkt zuerst durchströmten und kältesten Verdampfer 14, als auch den zweiten, vergleichsweise heißesten Verdampfer 16. Der letzte Verdampfer 18 selbst wird über Produktbrüden des zweiten Verdampfers 16 geheizt, welche bereits alkoholarm sind und somit einen ausreichenden Wärmeübertrag bei einigermaßen einheitlicher Kondensationstemperatur ermöglichen.

In Fig. 2 ist eine weitere Entalkoholisierungs-Anlage dargestellt, wobei Bauelemente, die ihrer Funktion nach solchen in Fig. 1 entsprechen, mit denselben Bezugsziffern, jeweils vermehrt um die Zahl 100, versehen sind.

Die Entalkoholisierungsanlage 110 besteht wiederum aus einer Reihe 112 von drei produktmäßig hintereinander geschalteten Verdampfern 114, 116, 118, wobei jedoch eine von einem Verdampfer 162 gebildete Entgasungsstufe im Produktflüssigkeitsstrom der Reihe 112 vorgeschaltet ist. Die Produktflüssigkeit wird also über eine Leitung 164 dem Eingang eines Verdampferteils 166 des Verdampfers 162 zugeführt; die in den Eingang des Verdampfers 114 mündende Leitung 122 geht vom Flüssigkeitsausgang des Verdampferteils 166 des Verdampfers 162 aus. Von einem Produktbrüdenausgang 168 des Verdampfers 162 geht eine Leitung 170 aus, die in einen Produkteingang eines Kondensators 172 einmündet, welcher über eine Leitung 174 mit Kühlwasser versorgt wird; eine Leitung 176 führt das Kühlwasser zurück. Der Verdampfer 162 dient dazu, die in der Produktflüssigkeit gelösten Inertgase (z.B. $CO_2$) zu entfernen, bevor die Produktflüssigkeit der Reihe 112 zugeführt wird. Dem Kondensator 172 werden also Wasserdampf, Alkohol und das Inertgas enthaltende Brüden zugeführt und nach Kondensation in einer Leitung 178 zur weiteren Verwendung abgeführt. In die Leitung 178 mündet eine Leitung 180, welche Brüdenkondensat aus dem Kondensator 158 abzieht. Entsprechend Fig. 1 werden dem Kondensator 158 Produktbrüden aus dem Verdampfer 114 zugeführt. Der Kondensator 158 wird wiederum durch Kühlwasser gekühlt, welches ihm über eine Leitung 182 zugeführt wird, von der auch die Leitung 174 ausgeht. Eine Leitung 184 führt das Kühlwasser vom Kondensator 158 zur Leitung 176 und damit zurück in den Kühlkreislauf.

Entsprechend Fig. 1 werden die vom dritten Verdampfer 118 abgegebenen Produktbrüden zur unmittelbaren Beheizung des ersten Verdampfers 114 (Leitungen 138 und 148) verwendet, wie auch, nach Verdichtung durch die Dampfstrahl-Pumpe 136, zur Beheizung des zweiten Verdampfers 116 (Leitung 140). Darüber hinaus wird auch der vorgeschaltete Verdampfer 162 mittels verdichteter Produktbrüden des dritten Kondensators 118 geheizt, wozu eine Leitung 186 einen Abzweigpunkt 188 der Leitung 140 mit dem Eingang eines Heizungsteils 190 des Verdampfers 162 verbindet.

Zu erwähnen ist schließlich noch, daß das Brüdenkondensat im Heizungsteil 146 des dritten Verdampfers 118 über eine Leitung 192 in die Leitungen 180 und 178 zur weiteren Verwendung eingespeist wird.

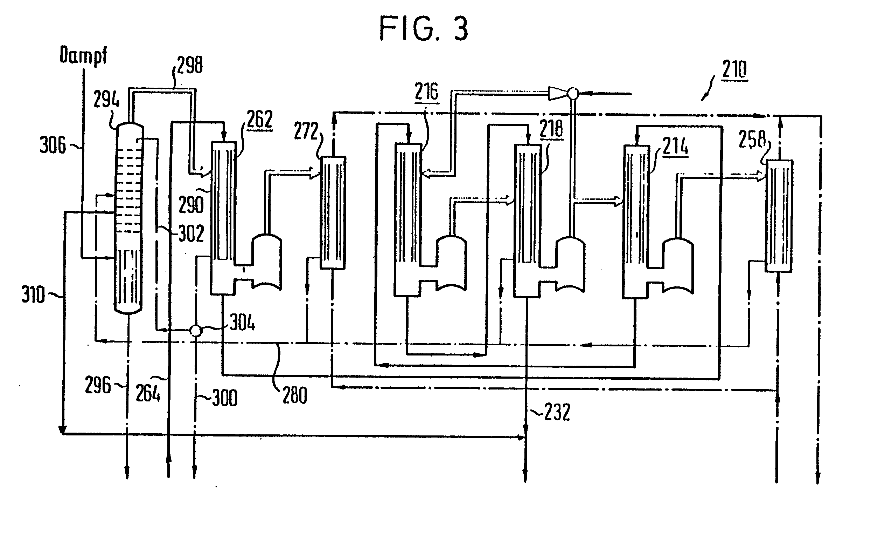

In Fig. 3 ist eine weitere Ausführungsform der erfindungsgemäßen Entalkoholisierungsanlage dargestellt, in welcher wiederum Elemente, die ihrer Funktion nach solchen in den Fig. 1 und 2 entsprechen, mit denselben Bezugsziffern, jeweils vermehrt um die Zahl 200 bzw. 100, versehen sind.

Die Entalkoholisierungsanlage 210 unterscheidet sich von der Anlage 110 gemäß Fig. 2 im wesentlichen dadurch, daß eine Destillationskolonne 294 vorgesehen ist, welche das in der Leitung 280 gesammelte Brüdenkondensat (aus den Kondensatoren 272 und 258 sowie aus dem dritten Verdampfer 218) in ein alkoholreiches und ein alkoholarmes Gemisch trennt. Letzteres wird von der Destillationskolonne 294 über eine Leitung 296 als Lutterwasser mit einem Alkoholgehalt ≦ 0,05 Gew.-% abgegeben. Das Kopfprodukt wird über eine Leitung 298 dem Eingang des Heizteils 290 des Verdampfers 262 der Entgasungsstufe zugeführt. Das entstehende Kondensat (Wasser-Alkohol-Mischung mit 90 Gew.-% Alkohol) wird über eine Leitung 300 vom Heizungsteil 290 abgegeben. Die Rückführung des Kondensats erfolgt über eine von der Leitung 300 ausgehende Leitung 302. Ein Rücklaufteiler 304 im Verzweigungspunkt der Leitungen 300, 302 bestimmt das Rücklaufverhältnis.

Die Destillationskolonne 294 wird über eine Leitung 306 mit Heizdampf beheizt. Der Verdampfer 262 der Entgasungsstufe wird mit dem dampfartigen Kopfprodukt der Destillationskolonne beheizt, also nicht, wie in Fig. 2, mit verdichteten Produktbrüden des dritten Verdampfers 218. Gemäß Fig. 2 werden dem Kondensator 272 die Produktbrüden des Verdampfers 262 zugeführt und dem Kondensator 258 die Produktbrüden des Verdampfers 214. Bei einer Zuführung von Bier mit einem Alkoholgehalt von etwa 1–7 Gew.-% über die Leitung 264 erhält man ein vom dritten Verdampfer 218 über die Leitung 232 abgegebenes Bierkonzentrat mit einem Alkoholgehalt von beispielsweise 0,04 Gew.-%.

Um die im Brüdenkondensat enthaltenen Aromastoffe dem gewonnenen Konzentrat zur Geschmacksverbesserung wieder zuführen zu können, wird aus der Destillationskolonne 294 im Bereich des entsprechenden Kolonnenbodens aromahaltige Flüssigkeit über eine Leitung 310 entnommen und mit der konzentrierten Produktflüssigkeit in der Leitung 232 vermischt. Da die aromahaltige Flüssigkeit Alkohol enthält, muß das Konzentrat dementsprechend weitgehender entalkoholisiert sein, damit die Mischung von Konzentrat und aromahaltiger Flüssigkeit den geforderten Alkoholgehalt-Grenzwert, beispielsweise 0,1 Vol.-%, einhält.

Sofern im Vorstehenden von Rückführung der Brüden die Rede ist, so ist darunter die Zuführung der in einem Verdampfer der Verdampferreihe gebildeten Brüden in den Heizteil eines der anderen Verdampfer der Verdampferreihe zu verstehen, im Gegensatz zu einem Wegführen der Brüden aus der Anlage (wie z.B. der Brüden des Verdampfers 14 in Fig. 1).

## Patentansprüche

1. Verfahren zur Entalkoholisierung von Bier, Bierhefe, Wein, Sekt, Schaumwein oder dergl. mit Hilfe einer Reihe aus wenigstens zwei im Produktflüssigkeitsstrom hintereinander geschalteten Verdampfern, wobei man zur Wärmerückgewinnung die vom Verdampferteil eines der Verdampfer abgegebenen Produktbrüden dem Heizteil wenigstens eines anderen Verdampfers der Anlage zuführt, wobei man die Produktbrüden der Verdampfer der Verdampferreihe, ausgenommen die des zuerst vom Produktflüssigkeitsstrom durchströmten Verdampfers, in die Anlage rückführt, dadurch gekennzeichnet, daß man bei einer wenigstens drei Verdampfer umfassenden Verdampferreihe verdichtete Produktbrüden des vom Produktflüssigkeitsstrom zuletzt durchströmten Verdampfers dem Heizteil eines im Produktflüssigkeitsstrom vorzugsweise unmittelbar vorausgehenden Verdampfers zuführt, und daß man unverdichtete Produktbrüden des vom Produktflüssigkeitsstrom zuletzt durchströmten Verdampfers dem Heizteil des vom Produktflüssigkeitsstrom zuerst durchströmten Verdampfers der Verdampferreihe zuführt.

2. Verfahren nach einem der vorhergehenden Ansprüche, dadurch gekennzeichnet, daß man die Produktflüssigkeit vor dem Einleiten in die Verdampferreihe durch eine Entgasungsstufe führt.

3. Verfahren nach Anspruch 2, dadurch gekennzeichnet, daß man, vorzugsweise verdichtete, Produktbrüden der Verdampferreihe dem Heizteil der vorzugsweise von einem Verdampfer gebildeten Entgasungsstufe zuführt.

4. Verfahren nach einem der vorhergehenden Ansprüche, dadurch gekennzeichnet, daß man dem Heizteil des zuletzt von der Produktflüssigkeit durchströmten Verdampfers der Verdampferreihe die im Verdampferteil des im Produktflüssigkeitsstrom unmittelbar vorangehenden Verdampfers gebildeten Produktbrüden unverdichtet zuführt.

5. Verfahren nach einem der vorhergehenden Ansprüche, dadurch gekennzeichnet, daß man im Heizteil wenigstens eines der Verdampfer und/oder in wenigstens einem der Kondensatoren gewonnenes Kondensat einer Destillationskolonne zuführt.

6. Verfahren nach Anspruch 5, dadurch gekennzeichnet, daß man die Brüden am Kopf der Destillationskolonne dem Heizteil eines die Entgasungsstufe bildenden Verdampfers zuführt, und daß man wenigstens einen Teil des im Heizteil des entsprechenden Verdampfers kondensierten Kopfprodukts dem Destillationsteil der Destillationskolonne rückführt.

7. Verfahren nach Anspruch 5 oder 6, dadurch gekennzeichnet, daß man der Destillationskolonne an einer oder mehreren Stellen aromahaltige Flüssigkeit entnimmt und vorzugsweise der Produktflüssigkeit nach Durchlauf durch die Verdampferreihe beimischt.

8. Vorrichtung zur Entalkoholisierung von Bier, Bierhefe, Wein, Sekt, Schaumwein oder dergleichen zur Durchführung des Verfahrens nach einem der vorhergehenden Ansprüche, umfassend eine Reihe (12; 112) aus wenigstens zwei im Produktflüssigkeitsstrom hintereinandergeschalteten Verdampfern (14, 16, 18; 114, 116, 118; 214, 216, 218) mit Rückführung verdichteter Produktbrüden des vom Produktflüssigkeitsstrom zuletzt durchströmten Verdampfers (18; 118; 218) zum Heizteil des im Produktflüssigkeitsstrom vorausgehenden Verdampfers (16; 116; 216) und mit Rückführung unverdichteter Produktbrüden des vom Produktflüssigkeitsstrom zuletzt durchströmten Verdampfers (18; 118; 218) zum Heizteil des vom Produktflüssigkeitsstrom zuerst durchströmten Verdampfers (14; 114; 214) der Verdampferreihe.

9. Vorrichtung nach Anspruch 8, gekennzeichnet durch eine der Verdampferreihe vorgeschaltete Entgasungsstufe (Verdampfer 162; 262).

10. Vorrichtung nach Anspruch 8 oder 9, dadurch gekennzeichnet, daß eine Destillationskolonne (294) vorgesehen ist, welcher Kondensatflüssigkeit wenigstens eines Teiles der Verdampfer (218) und/oder von Kondensatoren (258; 272) und/oder der Entgasungsstufe (262) zugeführt wird.

## Claims

1. A method of removing the alcohol from beer, beer yeast, wine, champagne, sparkling wine or the like, by means of a series of at least two vaporizers connected serially in the stream of liquid product, whereby, in order to recover heat, the product vapours delivered by the vaporizer part of one of the vaporizers is fed to the heating part of at least one other vaporizer in the system, the product vapours from the vaporizers of the series of vaporizers, with the exception of those of the first vaporizer through which the stream of product liquid passes, are fed back into the system, characterised in that in the case of a series comprising at least three vaporizers, compressed product vapours from the last vaporizer through which the flow of product liquid passes is fed to the heating part of a vaporizer which is preferably immediately precedent in the flow of product liquid, and in that uncompressed product vapours from the last vaporizer through which the stream of product liquid flows is fed to the heating part of that vaporizer of the series which was the first to receive the flow of product liquid.

2. A method according to one of the preceding Claims, characterised in that the product liquid is passed through a degassing stage prior to being fed into the series of vaporizers.

3. A method according to Claim 2, characterised in that preferably compressed product vapours from the series of vaporizers is fed to the heating part of the degassing stage which is preferably constituted by one vaporizer.

4. A method according to one of the preceding Claims, characterised in that the product vapours formed in the vaporizer part of the vaporizer which is immediately precedent in the stream of product liquid is fed uncompressed to the heating part of the last vaporizer in the series through which the product liquid passes.

5. A method according to one of the preceding Claims, characterised in that condensate obtained in the heating part of at least one of the vaporizers and/or in at least one of the condensers is fed to a distillation column.

6. A method according to Claim 5, characterised in that the vapours at the head of the distillation column are fed to the heating part of a vaporizer which forms the degassing stage and in that at least a part of the head product condensed in the heating part of the corresponding vaporizer is returned to the distillation part of the distillation column.

7. A method according to Claim 5 or 6, characterised in that aromatic fluid is drawn off from one or more locations on the distillation column and is preferably admixed with the product liquid after it has passed through the series of vaporizers.

8. An apparatus for removing the alcohol from beer, beer yeast, wine, champagne, sparkling wine or the like, for carrying out the method according to one of the preceding Claims, comprising a series (12; 112) of at least two vaporizers (14, 16, 18; 114, 116, 118; 214, 216, 218) connected in series in the flow of product liquid, with a facility of the return of compressed product vapours from the last vaporizer (18; 118; 218) through which the product liquid flow has passed, to the heating part of the vaporizer (16; 116; 216) which precedes it in the stream of product liquid and with facility for the return of uncompressed product vapours from the vaporizer (18; 118; 218) through which the stream of product liquid last passed, to the heating part of the vaporizer (14; 114; 214) of the series of vaporizers which was the first to have the stream of product liquid pass through it.

9. An apparatus according to Claim 8, characterised by a degassing stage (vaporizer 162; 262) which is upstream of the series of vaporizers.

10. An apparatus according to Claim 8 or 9, characterised in that a distillation column (294) is provided to which is passed liquid condensate from at least a part of the evaporators (218) and/or condensers (258; 272) and/or the degassing stage (262).

**Revendications**

1. Procédé pour la désalcoolisation de la bière, de la levure de bière, du vin, du champagne, du vin mousseux et produits analogues, à l'aide d'une série d'au moins deux évaporateurs montés les uns à la suite des autres dans le flux de produit liquide, procédé selon lequel, aux fins de récupération de chaleur, on amène la vapeur chaude de produit délivrée par la partie évaporatrice d'un des évaporateurs, à la partie chauffante d'au moins un autre évaporateur de l'installation, et selon lequel on recycle dans l'installation la vapeur chaude de produit des évaporateurs de la série d'évaporateurs à l'exception de celle de l'évaporateur traversé en premier par le flux de produit liquide, caractérisé en ce qu'en présence d'une série d'évaporateurs comprenant au moins trois évaporateurs, on amène la vapeur chaude de produit condensée de l'évaporateur traversé en dernier par le flux de produit liquide, à la partie chauffante d'un évaporateur, de préférence immédiatement précédent, dans le flux de produit liquide, et en ce qu'on amène la vapeur chaude de produit non condensée de l'évaporateur traversé en dernier par le flux de produit liquide, à la partie chauffante de l'évaporateur de la série d'évaporateurs qui est traversé en premier par le flux de produit liquide.

2. Procédé selon l'une des revendications précédentes, caractérisé en ce qu'on fait passer le produit liquide à travers un étage d'extraction des gaz, avant de l'amener à la série d'évaporateurs.

3. Procédé selon la revendication 2, caractérisé en ce qu'on amène la vapeur chaude de produit, de préférence condensée, de la série d'évaporateurs, à la partie chauffante de l'étage d'extraction des gaz, qui est constitué de préférence par un évaporateur.

4. Procédé selon l'une des revendications précédentes, caractérisé en ce qu'on amène, non condensée, à la partie chauffante de l'évaporateur de la série d'évaporateurs qui est traversé en dernier par le flux de produit liquide, la vapeur chaude de produit formée dans la partie évaporatrice de l'évaporateur immédiatement précédent dans le flux de produit liquide.

5. Procédé selon l'une des revendications précédentes, caractérisé en ce qu'on amène à une colonne de distillation le condensat récupéré dans la partie chauffante d'au moins un des évaporateurs et/ou dans au moins un des condenseurs.

6. Procédé selon la revendication 5, caractérisé en ce qu'on amène la vapeur chaude de produit formée sur la tête de la colonne de distillation, à la partie chauffante d'un évaporateur constituant l'étage d'extraction des gaz, et en ce qu'on recycle dans la partie distillatrice de la colonne de distillation, au moins une partie du produit de tête condensé dans la partie chauffante de l'évaporateur correspondant.

7. Procédé selon la revendication 5 ou 6, caractérisé en ce qu'on prélève dans la colonne de distillation, en un ou plusieurs endroits, du liquide contenant des arômes, et on le mélange de préférence au produit liquide après la traversée de la série d'évaporateurs.

8. Dispositif pour la désalcoolisation de la bière, de la levure de bière, du vin, du champagne, du vin mousseux et produits analogues, pour la mise en œuvre du procédé selon l'une des revendications précédentes, comprenant une série (12; 112) d'au moins deux évaporateurs (14, 16, 18; 114, 116, 118; 214, 216, 218) montés les uns à la suite des autres dans le flux de produit liquide, avec recyclage de la vapeur chaude de produit condensée de l'évaporateur (18; 118; 218) traversé en dernier par le flux de produit liquide, vers la partie chauffante de l'évaporateur (16; 116; 216) immédiatement précédent dans le flux de produit liquide, et avec recyclage de la vapeur chaude de produit non condensée de l'évaporateur (18; 118; 218) traversé en dernier par le flux de produit liquide, vers la partie chauffante de l'évaporateur (14; 114; 214) de la série d'évaporateurs qui est traversé en premier par le flux de produit liquide.

9. Dispositif selon la revendication 8, caractérisé par un étage d'extraction des gaz (évaporateur 162; 262) monté en amont de la série d'évaporateurs.

10. Dispositif selon la revendication 8 ou 9, caractérisé en ce qu'il est prévu une colonne de distillation (294), à laquelle est amené le condensat liquide provenant d'au moins une partie des évaporateurs (218) et/ou de condenseurs (258; 272) et/ou de l'étage d'extraction des gaz (262).

# FIG. 1

# FIG. 2

# FIG. 3

Dampf

EP 0 193 206 B1